# EUROPEAN PATENT APPLICATION

(11) **EP 4 586 332 A1**
(43) Date of publication of application: **16.07.2025**
(21) Application number: 25151360.2
(22) Date of filing: 10.01.2025
(51) Int. Cl.: H01M 4/04, H01M 4/13, H01M 4/70, H01M 10/04, H01M 50/533, H01M 50/54

(54) **ELECTRODE ASSEMBLY, METHOD FOR MANUFACTURING ELECTRODE ASSEMBLY, SECONDARY BATTERY, AND ELECTRONIC DEVICE**

(30) Priority: 11.01.2024 CN 202410043899
(71) Applicant: Ningde Amperex Technology Limited, Zhangwan Town, Jiaocheng District, Fujian Province Ningde City Fujian 352100 (CN)
(72) Inventor: CAI, Zhenghuang, Ningde City, Fujian Province 352100 (CN); ZHANG, Qingwen, Ningde City, Fujian Province 352100 (CN); YU, Feide, Ningde City, Fujian Province 352100 (CN)
(74) Representative: Icosa

(57) **Abstract**

The electrode assembly (100) includes a first electrode plate (10), a second electrode plate (20), and a separator (30). The first electrode plate (10) includes a first current collector (11) and a first tab (12). The first tab (12) extends from one side of the first current collector (11). In an extension direction of the first tab (12), the first tab (12) includes a first portion (121) and a second portion (122) which form a first step (13). The first portion (121) is cut before the formation of the electrode assembly (100), and the second portion (122) is cut after the electrode assembly (100) is formed. This ensures that a first uncoated foil region (15) can be fully cut off during a secondary cutting process to form a complete first tab (11), avoiding the problem of tab folding or reverse insertion during the formation of the electrode assembly (100).

## Description

### TECHNICAL FIELD

This application relates to the field of battery technology, and specifically, to an electrode assembly, a method for manufacturing an electrode assembly, a secondary battery, and an electronic device.

### BACKGROUND

In the process of manufacturing a battery, electrode plates having a plurality of tabs are prone to problems of tab folding and reverse insertion when stacked or wound, which causes internal short circuits in the battery, causing the battery to be scrapped, thus affecting the manufacturing yield and processing cost of the battery.

### SUMMARY

This application provides an electrode assembly, a method for manufacturing an electrode assembly, a secondary battery, and an electronic device to solve the foregoing technical problems.

Some embodiments of this application are implemented as follows.

An electrode assembly includes a first electrode plate, a second electrode plate, and a separator. The separator is disposed between the first electrode plate and the second electrode plate. The first electrode plate, the separator, and the second electrode plate form the electrode assembly. The first electrode plate includes a first current collector and a first tab, where a first active substance layer is provided on a surface of the first current collector; and the first tab extends from one side of the first current collector, and in an extension direction of the first tab, the first tab includes a first portion and a second portion sequentially disposed, where an insulating layer or the first active substance layer is provided on a surface of the first portion, and the first portion and the second portion form a first step. This allows the first portion to be formed by cutting the first current collector before the formation of the electrode assembly and allows the second portion to be formed by cutting a first uncoated foil region after the electrode assembly is formed, achieving the purpose of cutting and shaping the first tab after the electrode assembly is formed, thereby avoiding the problem of tab folding or reverse insertion during the formation of the electrode assembly. In addition, the provision of the step can ensure that the first uncoated foil region can be fully cut off.

In a possible embodiment, the first step includes a first section, a second section, and a third section, where the second section connects the first section and the third section, and the first section is connected to the first current collector. An included angle A is present between the first section and the second section, and A< 180°. The arrangement and constraint conditions of the three sections can ensure that the first uncoated foil region can be fully cut off during a secondary cutting process to form a complete first tab, and can also improve the manufacturing yield.

In a possible embodiment, the included angle A between the first section and the second section ranges from 90° to 170° so as to reduce the cutting difficulty of the first tab.

In a possible embodiment, an included angle B is present between the first section and a side edge of the first current collector, and the included angle B ranges from 70° to 150°; and/or, an included angle C is present between the second section and the third section, and the included angle C ranges from 70° to 90°. The first section, the second section, and the third section can all be inclined relative to the side edge of the first current collector, which is conducive to allowing for various manufacturing process errors.

In a possible embodiment, in the extension direction of the first tab, a width of the insulating layer or the first active substance layer on the first portion is h1, and a dimension range of h1 is 0.1 mm to 5 mm. This allows a portion of the insulating layer or the first active substance layer to be located on the first portion, and also prevents the excess first uncoated foil region from remaining at the edge of the first current collector.

In a possible embodiment, in the extension direction of the first tab, a distance between the second section and the first current collector is h2, and a dimension range of h2 is 0.1 mm to 30 mm. This avoids accidental cutting of the separator of the electrode assembly when performing secondary cutting on the first uncoated foil region to form the second portion.

In a possible embodiment, in the extension direction of the first tab, a length of the third section is h3, and a dimension range of h3 is 4 mm to 50 mm, allowing the first tab to have enough length.

In a possible embodiment, a plurality of first tabs are stacked, where a total width of a plurality of stacked second portions is X1 mm, a width of a single second portion is X2 mm, a total width of a plurality of stacked first portions is X3 mm, a width of a single first portion is X4 mm, and 0.8 mm>(X3-X4)-(X1-X2)>0.2 mm. The plurality of first portions are stacked during a stacking or winding process of the electrode plates, and after the stacking or winding process is completed, the plurality of second portions are simultaneously formed by performing secondary cutting on a stacked or wound first uncoated foil region at an end of the electrode assembly, so that a plurality of tab portions have high alignment, thereby improving the manufacturing accuracy of the first tab. When 0.8 mm>(X3-X4)-(X1-X2)>0.2 mm, the alignment of the stacked portions of the plurality of first tabs is high.

In a possible embodiment, the plurality of first tabs are stacked, the total width of the plurality of stacked second portions is X1 mm, the width of the single second portion is X2 mm, and (X1-X2)<0.5 mm.

In a possible embodiment, (X1-X2)<0.2 mm.

In a possible embodiment, the second electrode plate includes a second current collector and a second tab, where a second active substance layer is provided on a surface of the second current collector; the second tab extends from the second current collector and is disposed on one side of the second current collector, and in an extension direction of the second tab, the second tab includes a third portion and a fourth portion sequentially disposed; and a second step is provided between the third portion and the fourth portion, where the second step includes a fourth section, a fifth section, and a sixth section; the fifth section connects the fourth section and the sixth section; the fourth section is connected to the second current collector; and an included angle D is present between the fourth section and the fifth section, and D<180°.

An embodiment of this application further provides a method for manufacturing an electrode assembly. The method includes:
providing a first electrode plate, where the first electrode plate includes a first current collector and a first uncoated foil region, the first current collector is coated with a first active substance layer, and in a width direction of the first current collector, the first uncoated foil region is located at a side edge of the first current collector;
cutting a portion of the first electrode plate to form a first section of a first tab at one side of the first uncoated foil region close to the first current collector, where the first uncoated foil region remains partially connected to the first current collector;
providing a separator and a second electrode plate on the first electrode plate; and
cutting the first uncoated foil region to form a second section and a third section at one side of the first section away from the first current collector, where a portion of the first uncoated foil region other than the first tab is separated from the first current collector, and the first section, the second section, and the third section form a first step.

Thus, a first portion is formed by cutting the first uncoated foil region before a stacking or winding process of the electrode plates, and a second portion has not yet formed at this time. The first uncoated foil region remains connected to the first current collector through the first portion. During the stacking or winding process of the electrode plates, the first uncoated foil region can be synchronously stacked or wound with the first current collector. The first tab has not yet completely formed at this time, so there is no issue of folding or reverse insertion of the first tab during the stacking or winding process. After the electrode assembly is formed, a complete first tab is obtained by secondary cutting, ensuring the manufacturing yield of the electrode assembly.

In a possible embodiment, the step of "cutting a portion of the first electrode plate to form a first section of a first tab at one side of the first uncoated foil region close to the first current collector" includes:
cutting to form at least two first notches on the first current collector, where the at least two first notches are spaced apart along a length direction of the first electrode plate; and
a direction Z is a direction forming an angle of 2° to 90° with the length direction of the first electrode plate; along the direction Z, the first notch extends from the first current collector to the first uncoated foil region, and the first notch is not through in the direction Z; and a first portion of each first tab is formed between two adjacent first notches.

In a possible embodiment, each first notch includes a first slit and a second slit; the first slit is located at the first current collector; and the second slit is connected to the first slit, the second slit extends from the first current collector to the first uncoated foil region, and the second slit is not through in the direction Z.

In a possible embodiment, after the first electrode plate, the separator, and the second electrode plate form the electrode assembly, the step of "cutting the first uncoated foil region to form a second section and a third section at one side of the first section away from the first current collector" includes:
cutting to form at least two second notches in the first uncoated foil region, where each second notch is connected to the first notch and extends to an outer side edge of the first uncoated foil region, so as to cut off a portion of the first uncoated foil region other than the first tab, and a second portion of the first tab is formed between two adjacent second notches.

In a possible embodiment, the first step is formed between the second notch and the first notch, and the first step is located in the first uncoated foil region. The first step includes the first section, the second section, and the third section.

An embodiment of this application further provides a secondary battery including a package and the electrode assembly described in the foregoing embodiments, where the electrode assembly is disposed in the package .

An embodiment of this application further provides an electronic device including an electrical component and the secondary battery described in the foregoing embodiments, where the electrical component is electrically connected to the secondary battery.

### BRIEF DESCRIPTION OF DRAWINGS

To describe the technical solutions in some embodiments of this application more clearly, the following briefly describes the accompanying drawings for describing some embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a first electrode plate of an electrode assembly according to an embodiment of this application.
FIG. 2 is a schematic structural diagram of an electrode assembly according to an embodiment.
FIG. 3 is a schematic structural diagram of an electrode assembly according to another embodiment.
FIG. 4a is a schematic structural diagram of a first tab after stacked.
FIG. 4b is a schematic structural diagram of a single first tab.
FIG. 5 is a schematic structural diagram of a first electrode plate during a primary cutting process.
FIG. 6 is a schematic structural diagram of an electrode assembly during a secondary cutting process.
FIG. 7 is a schematic structural diagram of an electrode assembly after a secondary cutting process in FIG. 6.
FIG. 8 is a schematic structural diagram of a first electrode plate during a primary cutting process according to another embodiment.
FIG. 9 is a schematic structural diagram of an electrode assembly during a secondary cutting process according to another embodiment.
FIG. 10 is a schematic structural diagram of an electrode assembly after a secondary cutting process in FIG. 9.
FIG. 11 is a schematic structural diagram of an electrode assembly during a secondary cutting process according to another embodiment.
FIG. 12 is a schematic structural diagram of an electrode assembly after a secondary cutting process in FIG. 11.
FIG. 13 is a schematic structural diagram of a first electrode plate during a primary cutting process according to another embodiment.
FIG. 14 is a schematic structural diagram of an electrode assembly during a secondary cutting process according to another embodiment.
FIG. 15 is a schematic structural diagram of an electrode assembly after a secondary cutting process in FIG. 14.
FIG. 16 is a schematic structural diagram of a first electrode plate during a primary cutting process according to another embodiment.
FIG. 17 is a schematic structural diagram of a first electrode plate during a primary cutting process according to another embodiment.
FIG. 18 is a schematic structural diagram of a first electrode plate after removing cut scrap in FIG. 17.
FIG. 19 is a schematic structural diagram of an electrode assembly during a secondary cutting process according to another embodiment.
FIG. 20 is a schematic structural diagram of an electrode assembly after a secondary cutting process in FIG. 19.
FIG. 21 is a schematic structural diagram of a first electrode plate during a primary cutting process according to another embodiment.
FIG. 22 is a schematic structural diagram of a secondary battery according to an embodiment.
FIG. 23 is a schematic structural diagram of an electronic device according to an embodiment.

### Reference signs of main components:

| | |
|---|---|
| Electrode assembly | 100 |
| First electrode plate | 10 |
| First current collector | 11 |
| First tab | 12 |
| First portion | 121 |
| Second portion | 122 |
| First step | 13 |
| First section | 131 |
| Second section | 132 |
| Third section | 133 |
| First active substance layer | 14 |
| First uncoated foil region | 15 |
| Second electrode plate | 20 |
| Second current collector | 21 |
| Second tab | 22 |
| Third portion | 221 |
| Fourth portion | 222 |
| Second step | 23 |
| Fourth section | 231 |
| Fifth section | 232 |
| Sixth section | 233 |
| Second active substance layer | 24 |
| Separator | 30 |
| Insulating layer | 40 |
| First notch | 50 |
| First slit | 51 |
| Second slit | 52 |
| Second notch | 60 |
| Secondary battery | 200 |
| Package | 201 |
| Electronic device | 300 |
| Electrical component | 301 |

### DESCRIPTION OF EMBODIMENTS

The following clearly and completely describes the technical solutions in some embodiments of this application with reference to the accompanying drawings in some embodiments of this application. Apparently, the described embodiments are some but not all embodiments of this application.

It should be noted that when a component is referred to as being "fixed to" another component, it may be directly fixed to the another component or with a component possibly present therebetween. When a component is referred to as being "connected to" another component, it may be directly connected to the another component or with a component possibly present therebetween. When one component is assumed as being "disposed on/in" another component, the component may be provided directly on/in the another component or with a component possibly present therebetween. The terms "perpendicular", "horizontal", "left", "right", and other similar expressions as used herein are for illustration only.

Unless otherwise defined, all technical and scientific terms used herein shall have the same meanings as commonly understood by persons skilled in the art to which this application pertains. The terms used herein in the specification of this application are merely for the purpose of describing specific embodiments but are not intended to limit this application. The term "and/or" used herein includes any and all combinations of one or more associated items listed.

Some embodiments of this application are described in detail. Without conflict, the following embodiments and features in these embodiments may be combined with each other.

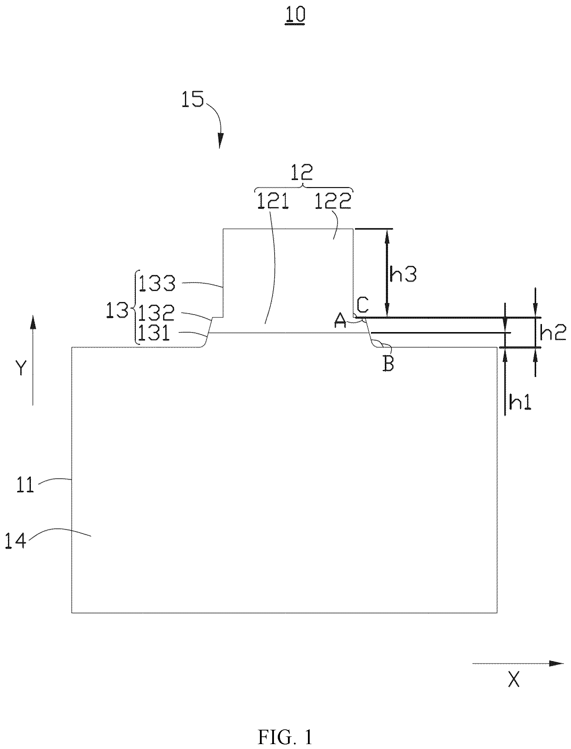

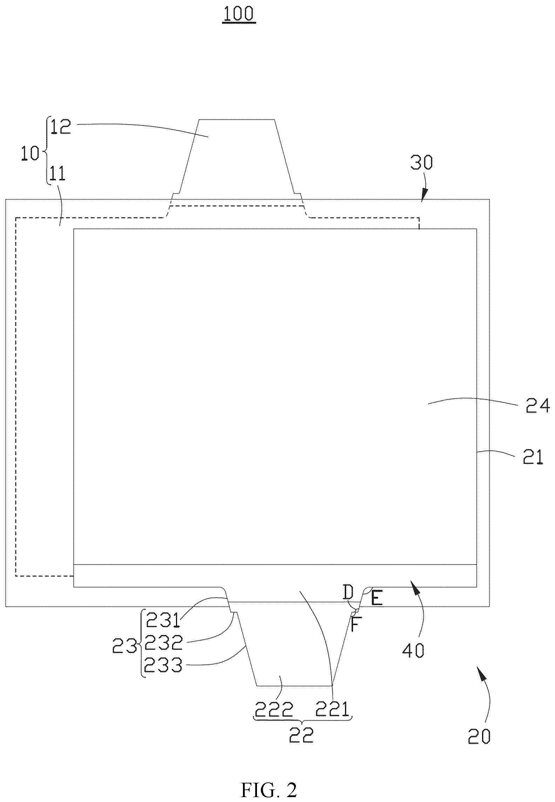

Referring to FIGs. 1 and 2, an embodiment provides an electrode assembly 100 including a first electrode plate 10, a second electrode plate 20, and a separator 30. The separator 30 is disposed between the first electrode plate 10 and the second electrode plate 20. The first electrode plate 10, the separator 30, and the second electrode plate 20 form the electrode assembly 100. As shown in FIG. 1, the first electrode plate 10 includes a first current collector 11 and a first tab 12. A first active substance layer 14 is provided on a surface of the first current collector 11, and the first tab 12 extends from one side of the first current collector 11. In an extension direction of the first tab 12, the first tab 12 includes a first portion 121 and a second portion 122 sequentially disposed, where an insulating layer 40 or the first active substance layer 14 is provided on a surface of the first portion 121, and the first portion 121 and the second portion 122 form a first step 13. The first electrode plate 10, the separator 30, and the second electrode plate 20 can be stacked layer by layer or wound to form the electrode assembly 100. In the extension direction of the first tab 12, one side of the first current collector 11 is provided with a first uncoated foil region 15, and the first tab 12 is formed on one side of the first current collector 11 by cutting the first uncoated foil region 15. Specifically, before a stacking or winding process of the electrode plates, primary cutting is performed on the first uncoated foil region 15, and the first portion 121 is formed on one side of the first current collector 11. The second portion 122 has not yet formed at this time, and the first uncoated foil region 15 remains connected to the first current collector 11. During the stacking or winding process of the electrode plates, the first uncoated foil region 15 is synchronously stacked or wound with the electrode plates. After the electrode assembly 100 is formed by stacking or winding the electrode plates, secondary cutting is performed on the first uncoated foil region 15. A notch formed during secondary cutting is connected to a notch formed during primary cutting to cut off an excess portion of the first uncoated foil region 15 so as to form the second portion 122 of the first tab 12. The first step 13 is formed between the first portion 121 and the second portion 122. A portion of the first uncoated foil region 15 other than the first tab 12 is separated from the first current collector 11. Moreover, the provision of the step can ensure that the first uncoated foil region can be fully cut off.

The first step 13 includes a first section 131, a second section 132, and a third section 133, where the second section 132 connects the first section 131 and the third section 133, and the first section 131 is connected to the first current collector 11. An included angle A is present between the first section 131 and the second section 132, and A<180°. Thus, during the stacking or winding process of the electrode plates, the first tab 12 has not yet formed, the entire first uncoated foil region 15 is synchronously stacked or wound with the electrode plates, and there is no issue of folding or reverse insertion of the tab. After the stacking or winding process is completed, a complete first tab 12 is obtained by performing secondary cutting on the first uncoated foil region 15. This ensures the manufacturing yield of the electrode assembly 100, and is also conducive to improving the manufacturing accuracy of the first tab 12.

Further, when the first electrode plate 10 is an anode electrode plate, the first active substance layer 14 is provided on a surface of the first portion 121. When the first electrode plate 10 is a cathode electrode plate, the insulating layer 40 is provided on the surface of the first portion 121 to avoid internal short circuits caused by accidental contact between the edges of the first electrode plate 10 and the second electrode plate 20, improving the safety performance of the electrode assembly 100.

In an embodiment, the included angle A between the first section 131 and the second section 132 ranges from 90° to 170° so as to reduce the cutting difficulty of the first tab 12, so that an excess portion of the first uncoated foil region 15 can be cut off during a secondary cutting process, and the first step 13 is formed between the first portion 121 and second portion 122 of the first tab 12. Further, an included angle B is present between the first section 131 and a side edge of the first current collector 11, and the included angle B ranges from 70° to 150°. An included angle C is present between the second section 132 and the third section 133, and the included angle C ranges from 70° to 90°. Thus, the first section 131, the second section 132, and the third section 133 can all be inclined relative to the side edge of the first current collector 11, which is conducive to allowing for various manufacturing process errors and reducing the process difficulty, thereby improving the manufacturing efficiency and reducing the manufacturing costs.

In an embodiment, as shown in FIG. 1, in the extension direction of the first tab 12, a width of the insulating layer 40 or the first active substance layer 14 on the first portion 121 is h1, and a dimension range of h1 is 0.1 mm to 5 mm. Thus, when the first current collector 11 is cut, the requirements of process errors can be satisfied, a portion of the insulating layer 40 or the first active substance layer 14 is located on the first portion 121, and the excess first uncoated foil region 15 can be prevented from remaining at the edge of the first current collector 11.

In an embodiment, in the extension direction of the first tab 12, a distance between the second section 132 and the first current collector 11 is h2, and a dimension range of h2 is 0.1 mm to 30 mm. The distance h2 may alternatively be greater than h1. Thus, when secondary cutting is performed on the first uncoated foil region 15 to form the second portion 122, accidental cutting of the separator 30 of the electrode assembly 100 can be avoided, further improving the manufacturing yield of the electrode assembly 100.

In an embodiment, in the extension direction of the first tab 12, a length of the third section 133 is h3, and a dimension range of h3 is 4 mm to 50 mm. That is, the length of the second portion 122 is 4 mm to 50 mm, so that the first tab 12 has enough length to satisfy the design requirements of the electrode assembly 100.

In an optional embodiment, referring to FIG. 2, the second electrode plate 20 includes a second current collector 21 and a second tab 22. A second active substance layer 24 is provided on a surface of the second current collector 21. The second tab 22 extends from the second current collector 21 and is disposed on one side of the second current collector 21, and in an extension direction of the second tab 22, the second tab 22 includes a third portion 221 and a fourth portion 222 sequentially disposed. The insulating layer 40 or a second active substance layer 24 may also be provided on a surface of the third portion 221. Similarly, when the second electrode plate 20 is an anode electrode plate, the second active substance layer 24 is provided on the surface of the third portion 221. When the second electrode plate 20 is a cathode electrode plate, the insulating layer 40 is provided on the surface of the third portion 221. In an embodiment shown in FIG. 2, the first electrode plate 10 is an anode electrode plate, and the second electrode plate 20 is a cathode electrode plate. One side of a second current collector 21 is provided with a second uncoated foil region, and the second tab 22 can also be formed on one side of the second current collector 21 by cutting the second uncoated foil region 25. Specifically, before the stacking or winding process of the electrode plates, the third portion 221 is first formed on one side of the second current collector 21 by cutting the second electrode plate 20. After the electrode assembly 100 is formed by stacking or winding the electrode plates, a fourth portion 222 is formed by performing secondary cutting on the second uncoated foil region, and a portion of the second uncoated foil region other than the second tab 22 is separated from the second current collector 21. The forming process of the second tab 22 is substantially the same as that of the first tab 12. Details are not described herein again. In an embodiment of this application, a second step 23 is provided between the third portion 221 and the fourth portion 222. The second step 23 includes a fourth section 231, a fifth section 232, and a sixth section 233. The fifth section 232 connects the fourth section 231 and the sixth section 233. The fourth section 231 is connected to the second current collector 21. An included angle D is present between the fourth section 231 and the fifth section 232, and D<180°.

Further, the included angle D between the fourth section 231 and the fifth section 232 ranges from 90° to 170° so as to reduce the cutting difficulty of the second tab 22, so that an excess portion of the second uncoated foil region can be cut off during a secondary cutting process, and the second step 23 is formed between the third portion 221 and fourth portion 222 of the second tab 22. Further, an included angle E is present between the fourth section 231 and a side edge of the second current collector 21, and the included angle E ranges from 70° to 150°. An included angle F is present between the fifth section 232 and the sixth section 233, and the included angle F ranges from 70° to 90°. Thus, the fourth section 231, the fifth section 232, and the sixth section 233 can also be inclined relative to the side edge of the second current collector 21, further allowing for manufacturing process errors and reducing the process difficulty, thereby improving the manufacturing efficiency.

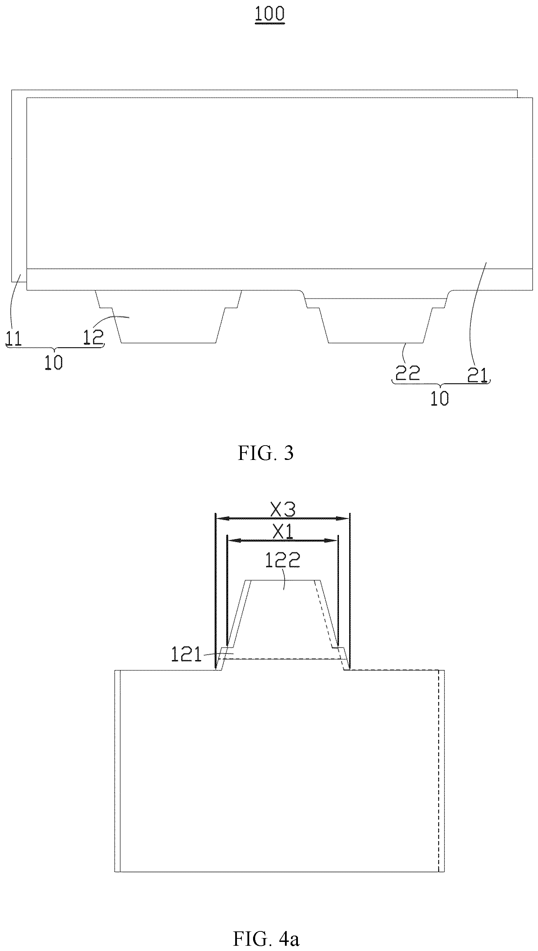

As shown in FIG. 2, the first tab 12 and the second tab 22 may be located on two opposite sides of the electrode assembly 100, respectively, which is conducive to reducing a horizontal dimension of the electrode assembly 100. In another embodiment, as shown in FIG. 3, the first tab 12 and the second tab 22 may alternatively be provided on a same side of the electrode assembly 100, which is conducive to reducing a vertical dimension of the electrode assembly 100, thereby satisfying various manufacturing requirements.

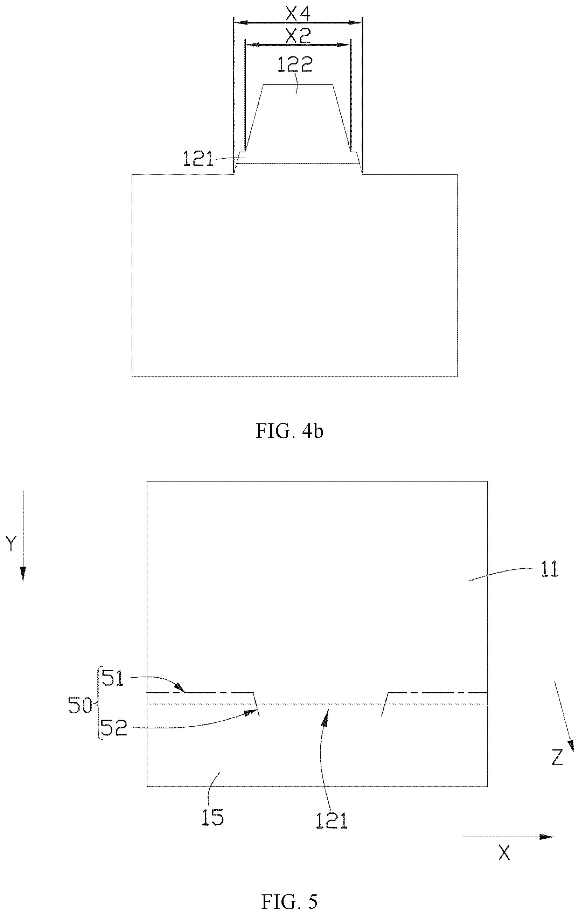

Referring to FIGs. 4a and 4b, in an embodiment, the electrode assembly 100 may alternatively include a plurality of first tabs 12, and the plurality of first tabs 12 are stacked. A total width of a plurality of stacked second portions 122 is X1 mm, a width of a single second portion 122 is X2 mm, a total width of a plurality of stacked first portions 121 is X3 mm, and a width of a single first portion 121 is X4 mm, where X1>3, X1>X2, X3>X4, and 0.8 mm>(X3-X4)-(X1-X2)>0.2 mm.

It should be noted that the plurality of first portions 121 are stacked during the stacking or winding process of the electrode plates, and a manufacturing process causes stacking errors when the plurality of first portions 121 are stacked layer by layer, resulting in the total width of the stacked first portions 121 being greater than the width of the single first portion 121. After the stacking or winding process is completed, the plurality of second portions 122 are simultaneously formed by performing secondary cutting on the stacked or wound first uncoated foil region 15 at an end of the electrode assembly 100. Although process errors may occur during the cutting process, the alignment of the plurality of stacked second portions 122 is significantly better than that of the plurality of stacked first portions 121. Thus, the manufacturing accuracy of the first tab 12 can be improved, facilitating the electrical connection between the first tab 12 and an external electrical terminal or an electrical component 301.

Further, in an embodiment, the total width of the plurality of stacked second portions 122 is X1, the width of the single second portion 122 is X2, (X1-X2)<0.5 mm, and preferably, (X1-X2)<0.2 mm. Thus, the alignment of the plurality of first tabs 12 can be precisely controlled and effectively improved.

Still referring to FIG. 1, in an embodiment of this application, the first step 13 is formed on two opposite sides of the first tab 12. In another embodiment, when the plurality of first tabs 12 are stacked, some of the plurality of first tabs 12 may form the first step 13 on one side or form the first step 13 on both sides, ensuring that an excess portion of the first uncoated foil region 15 can be cut off during the secondary cutting. Referring to FIGs. 5, 6, and 7, an embodiment of this application further provides a method for manufacturing an electrode assembly 100. The method includes:
providing a first electrode plate 10, where the first electrode plate 10 includes a first current collector 11 and a first uncoated foil region 15, the first current collector 11 is coated with a first active substance layer 14, and
in a width direction of the first current collector 11, the first uncoated foil region 15 is located at a side edge of the first current collector 11;
cutting a portion of the first electrode plate 10 to form a first section 131 of the first tab 12 at one side of the first uncoated foil region 15 close to the first current collector 11, where the first uncoated foil region 15 remains partially connected to the first current collector 11;
providing a separator 30 and a second electrode plate 20 on the first electrode plate 10; and
cutting the first uncoated foil region 15 to form a second section 132 and a third section 133 at one side of the first section 131 away from the first current collector 11, where a portion of the first uncoated foil region 15 other than the first tab 12 is separated from the first current collector 11, and the first section 131, the second section 132, and the third section 133 form a first step 13.

Specifically, when the separator 30 and the second electrode plate 20 are provided on the first electrode plate 10 to form the electrode assembly 100, the first electrode plate 10, the separator 30, and the second electrode plate 20 can be stacked layer by layer to form a stacked electrode assembly 100 or wound to form a wound electrode assembly 100. Specifically, as shown in FIG. 5, one or more first electrode plates 10 may be provided. Each first electrode plate 10 is cut to form a first portion 121, and the first uncoated foil region 15 remains connected to the first current collector 11.

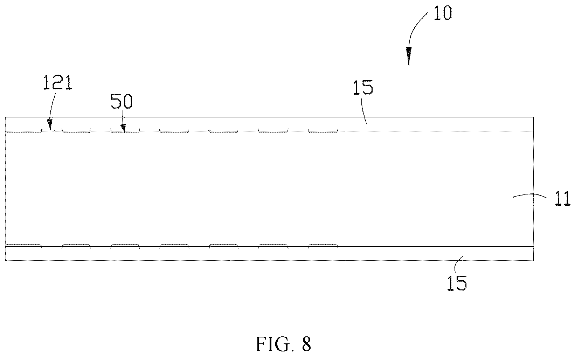

In another embodiment, as shown in FIG. 8, the first electrode plate 10 may be a strip-shaped plate structure, and a plurality of first portions 121 are formed at intervals on a side edge of the first current collector 11. In an embodiment shown in FIG. 8, two opposite sides of the first current collector 11 are each provided with the first uncoated foil region 15. Therefore, two opposite sides of the first current collector 11 may be each provided with a plurality of first portions 121. In another embodiment, the first uncoated foil region 15 may alternatively be provided on one side of the first current collector 11, and the plurality of first portions 121 are spaced apart on one side of the first current collector 11. The first electrode plate 10 in FIG. 8 can be folded in a Z shape or wound with the second electrode plate 20 and the separator 30 to form the electrode assembly 100. During the folding or winding process of the first electrode plate 10, a plurality of first portions 121 are stacked layer by layer.

The first portion 121 is formed by cutting the first uncoated foil region 15 before the stacking or winding process of the electrode plates. A second portion 122 has not yet formed at this time, and the first uncoated foil region 15 remains connected to the first current collector 11 through the first portion 121. During the stacking or winding process of the electrode plates, the first uncoated foil region 15 can be synchronously stacked or wound with the first current collector 11. The first tab 12 has not yet completely formed at this time, so there is no issue of folding or reverse insertion of the first tab 12 during the stacking or winding process. After the electrode assembly 100 is formed by stacking or winding the electrode plates, secondary cutting is performed on the first uncoated foil region 15. A notch formed during secondary cutting is connected to a notch formed during primary cutting to cut off an excess portion of the first uncoated foil region 15 so as to form the second portion 122 of the first tab 12. A portion of the first uncoated foil region 15 other than the first tab 12 is separated from the first current collector 11. Thus, after the electrode assembly 100 is formed, a complete first tab 12 is obtained by secondary cutting. This ensures the manufacturing yield of the electrode assembly 100 and is also conducive to improving the manufacturing accuracy of the first tab 12.

Still referring to FIG. 5, in a possible embodiment, the step of "cutting a portion of the first electrode plate 10 to form a first section 131 of a first tab 12 at one side of the first uncoated foil region 15 close to the first current collector 11" includes:
cutting to form at least two first notches 50 on the first current collector 11,
where the at least two first notches 50 are spaced apart along a length direction of the first electrode plate 10.

Specifically, the first notch 50 can be processed by stamping or laser cutting. A portion of the first notch 50 is located in an edge region of the first current collector 11 and is substantially parallel to a side edge of the first current collector 11. Another portion of the first notch 50 extends from the first current collector 11 to the first uncoated foil region 15. Thus, a small portion of the first active substance layer 14 at an edge of the first current collector 11 may be cut off. On one hand, this satisfies the requirements on process accuracy, and on the other hand, this can avoid the appearance of the uncoated foil region at the edge of the first active substance layer 14 after the first tab 12 is formed, reducing the safety risk of internal short circuits.

Further, in a possible embodiment, each first notch 50 includes a first slit 51 and a second slit 52. The first slit 51 is located at the first current collector 11. The second slit 52 is connected to the first slit 51, the second slit 52 extends from the first current collector 11 to the first uncoated foil region 15, and the second slit 52 is not through in a direction Z. As shown in FIG. 5, each first notch 50 includes one first slit 51 and one second slit 52, where the first slit 51 and the second slit 52 substantially form an L-shaped structure. Two first notches 50 are symmetrically distributed on the side edges of the first current collector 11. In another embodiment, as shown in FIG. 8, one first notch 50 may include one first slit 51 and two second slits 52. The two second slits 52 are symmetrically connected to two ends of the first slit 51, respectively. The first notch 50 is substantially U-shaped, and a plurality of first notches 50 are spaced apart at the side edges of the first current collector 11 to form a plurality of first portions 121.

The direction Z is a direction forming an angle of 2° to 90° with the length direction of the first electrode plate 10. Along the direction Z, the second slit 52 extends from the first current collector 11 to the first uncoated foil region 15, and the second slit 52 is not through in the direction Z. The first portion 121 of each first tab 12 is formed between two adjacent second slits 52.

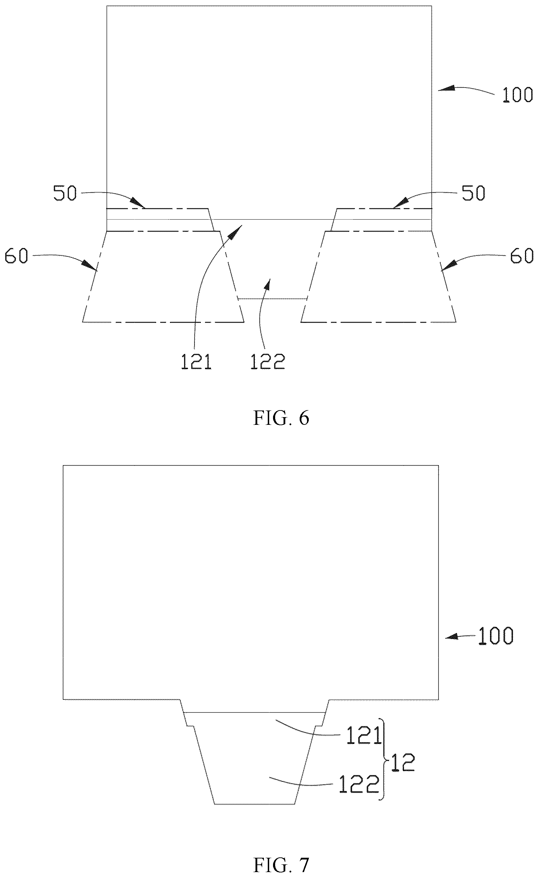

Further, referring to FIGs. 6 and 7, after the first electrode plate 10, the separator 30, and the second electrode plate 20 form the electrode assembly 100, the step of "cutting the first uncoated foil region 15 to form a second section 132 and a third section 133 at one side of the first section 131 away from the first current collector 11" includes:
cutting to form at least two second notches 60 in the first uncoated foil region 15, where each second notch 60 is connected to the first notch 50 and
extends to an outer side edge of the first uncoated foil region 15, so as to cut off a portion of the first uncoated foil region 15 other than the first tab 12,
and a second portion 122 of the first tab 12 is formed between two adjacent second notches 60.

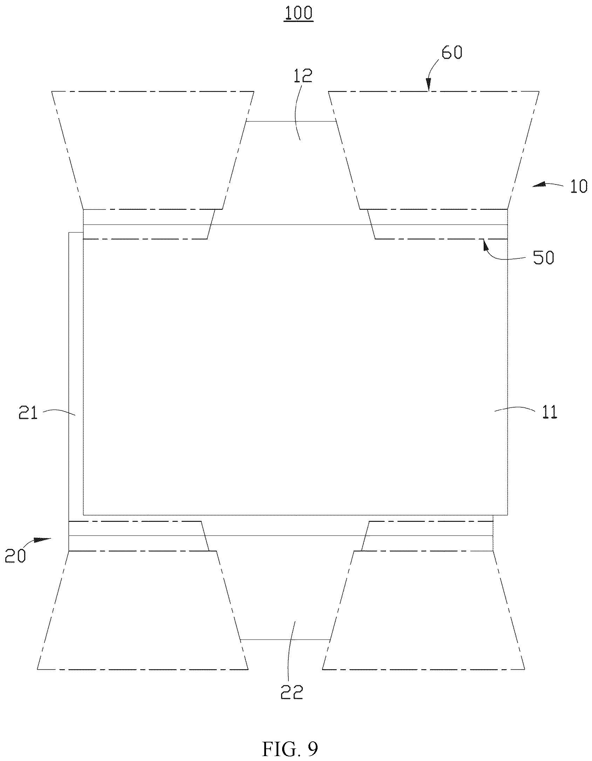

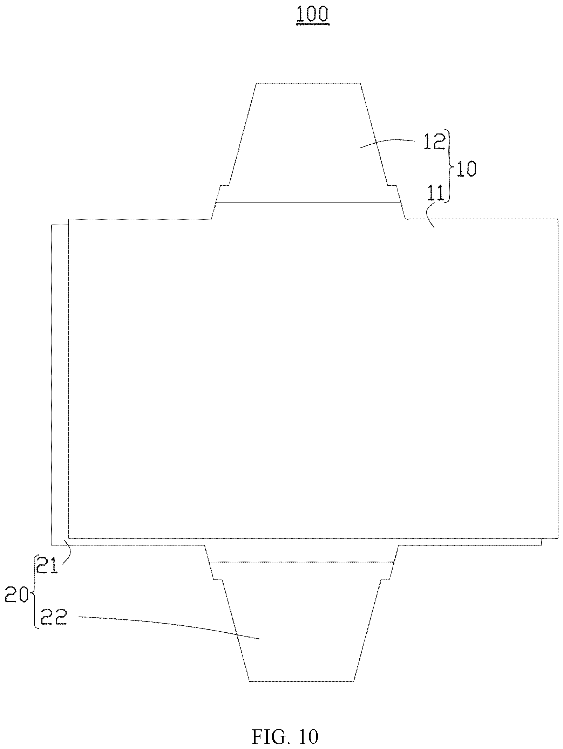

Specifically, the second notch 60 substantially forms a trapezoidal notch and may alternatively be processed by mechanical stamping or laser cutting. The second slit 52 of the first notch 50 forms the first section 131 at a side edge of the first portion 121. The second notch 60 forms the second section 132 and the third section 133 at a side edge of the second portion 122. The first section 131, the second section 132, and the third section 133 are connected to form the first step 13. The second notch 60 forms the first step 13 between the first portion 121 and the second portion 122 to ensure that the second notch 60 can cut off the portion of the first uncoated foil region 15 other than the first tab 12. Included angles, lengths, and other dimensions of the sections are the same as those in the foregoing embodiments. Details are not described herein again. In the electrode assembly 100 shown in FIG. 7, the second electrode plate 20 and the separator 30 are not the main feature parts, and therefore are omitted from the content of FIG. 7. In an embodiment shown in FIG. 7, the second tab 22 on the second electrode plate 20 can be welded by external tab connection. This application is not limited thereto. Referring to FIGs. 9 and 10, in another embodiment, a treatment method of the second electrode plate 20 is substantially the same as that of the first electrode plate 10. The second tab 22 may alternatively be formed at an end of the electrode assembly 100 by secondary cutting. Specifically, primary cutting may be first performed on the second electrode plate 20 before the stacking or winding process to form a third portion 221 of the second tab 22. A second uncoated foil region of the second electrode plate 20 remains connected to a second current collector 21 through the third portion 221. The primary cutting method of the second electrode plate 20 is substantially the same as those of the first electrode plates 10 shown in FIGs. 5 and 8. Details are not described herein again. Subsequently, the second electrode plate 20 after primary cutting, the separator 30, and the first electrode plate 10 after primary cutting can be stacked, where the three are stacked layer by layer, folded, or wound to form the electrode assembly 100.

As shown in FIG. 9, when the first electrode plate 10 and the second electrode plate 20 are stacked, the first portion 121 and the third portion 221 can be respectively provided on two opposite sides of the electrode assembly 100, so that after the electrode assembly 100 is formed, secondary cutting can be performed on the first uncoated foil region 15 and the second uncoated foil region from the two opposite ends of the electrode assembly 100 to form the second portion 122 of the first tab 12 and a fourth portion 222 of the second tab 22. The excess portions of the first uncoated foil region 15 and the second uncoated foil region can be cut off and removed from two ends of the electrode assembly 100. The first tab 12 and the second tab 22 are respectively formed on the two opposite sides of the electrode assembly 100 to obtain the electrode assembly 100 as shown in FIG. 10. The secondary cutting method of the second electrode plate 20 is substantially the same as the cutting method of the first electrode plate 10 as shown in FIG. 6. After the electrode assembly 100 is formed, the secondary cutting processes of the first electrode plate 10 and the second electrode plate 20 can be simultaneously performed, which is conducive to improving manufacturing efficiency. Alternatively, the secondary cutting processes can be performed in stages, which is conducive to controlling the cutting accuracy and improving the processing quality.

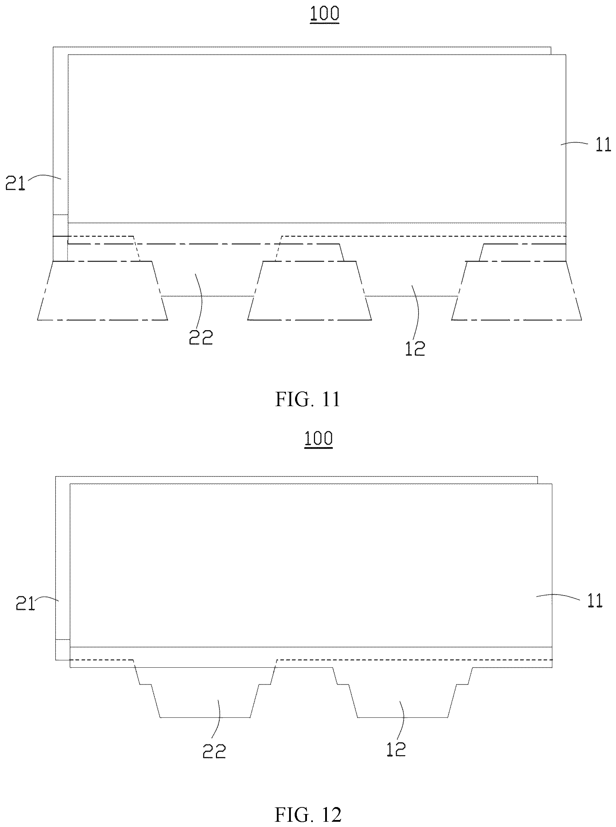

Referring to FIGs. 11 and 12, in another embodiment, when the first electrode plate 10 and the second electrode plate 20 are stacked, the first portion 121 and the third portion 221 may alternatively be provided on a same side of the electrode assembly 100, so that after the electrode assembly 100 is formed, secondary cutting can be performed on the first uncoated foil region 15 and the second uncoated foil region from the same side of the electrode assembly 100. Since the positions of the first portion 121 and the third portion 221 have been determined during the primary cutting process and the forming process of the electrode assembly 100, the first portion 121 and the third portion 221 only need to be aligned with corresponding regions during secondary cutting so as to cut off the excess portion of the first uncoated foil region 15 and the excess portion of the second uncoated foil region, so that a complete first tab 12 is formed on the side edge of the first current collector 11, and a complete second tab 22 is formed on the side edge of the second current collector 21.

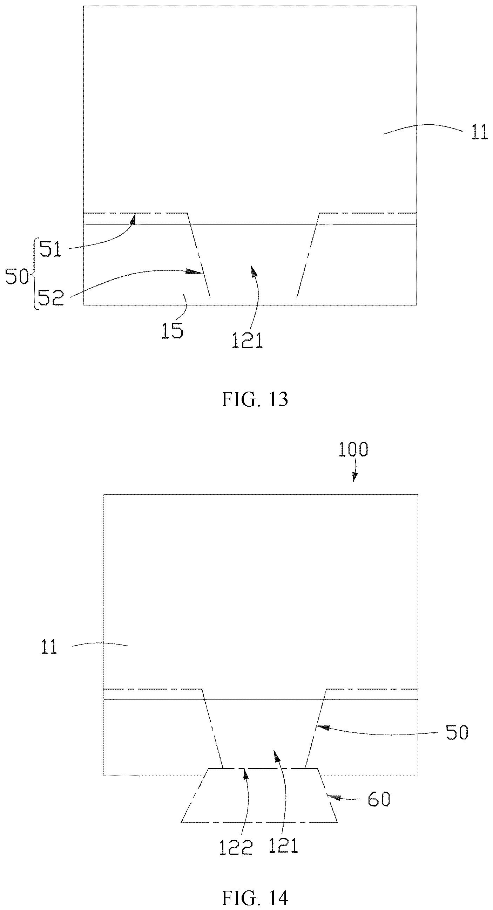

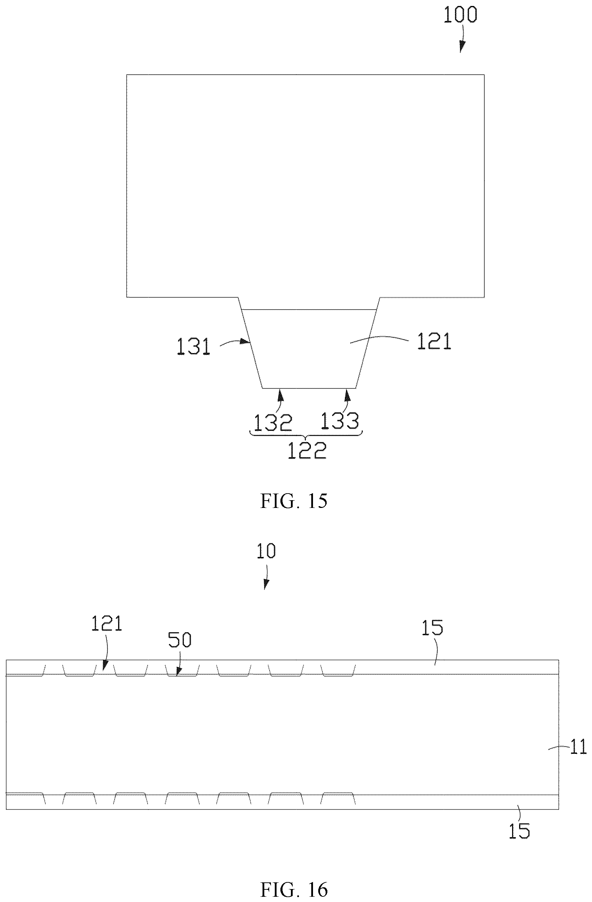

In an embodiment, referring to FIGs. 13, 14, and 15, a manufacturing method of the electrode assembly 100 is substantially the same as those of these embodiments shown in FIGs. 5 and 6, except that in these embodiments shown in FIGs. 13, 14, and 15, the second slit 52 of the first notch 50 can extend to the edge of the first uncoated foil region 15 along the direction Z, but the second slit 52 does not cut off the first uncoated foil region 15. After the electrode assembly 100 is formed, the second notch 60 cuts off a region between the first uncoated foil region 15 and the second slit 52, so that the portion of the first uncoated foil region 15 other than the first tab 12 is separated from the first current collector 11. In this case, each second notch 60 is connected between two adjacent second slits 52 to cut off the connection between the first notch 50 and the first uncoated foil region 15. The second portion 122 is an end side edge of the first tab 12. The second section 132 and the third section 133 are located in a same straight line. Compared with the cutting methods shown in FIGs. 5 and 6, the cutting methods shown in FIGs. 12 and 13 can reduce the number of notches and improve the cutting efficiency. Referring to FIG. 16, a cutting method of the first portion 121 in an embodiment shown in FIG. 16 is substantially the same as that of an embodiment shown in FIG. 12, except that in this embodiment shown in FIG. 16, the plurality of first portions 121 are formed at intervals on two opposite sides of the first current collector 11. In another embodiment, the plurality of first portions 121 may alternatively be formed at intervals on one side of the first current collector 11.

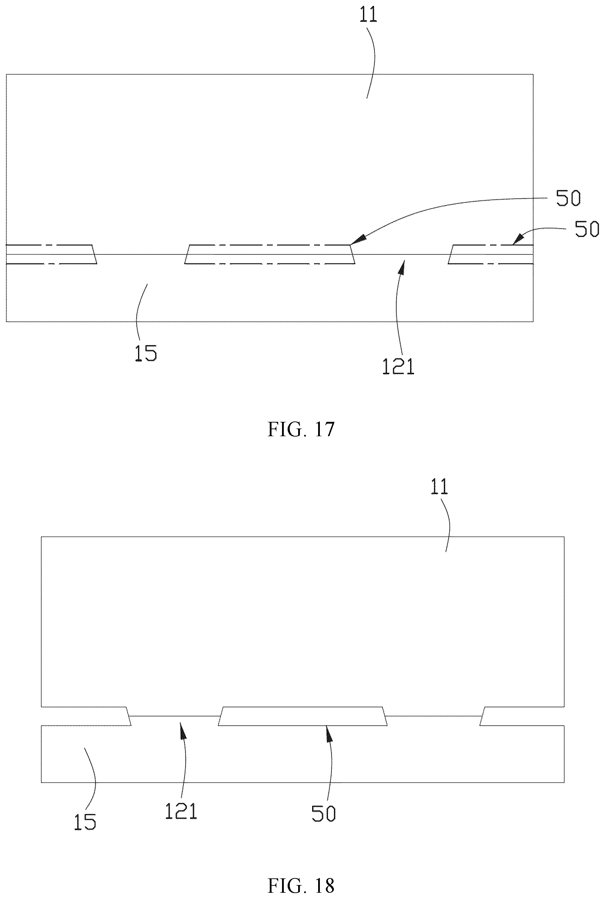

Referring to FIGs. 17, 18, 19, and 20, manufacturing methods of the electrode assembly 100 are substantially the same as those of these embodiments shown in FIGs. 5 and 6, except that in these embodiments shown in FIGs. 17 to 20, the first notch 50 is a through-hole structure. An edge structure of one first notch 50 can first be cut out on the first current collector 11 by laser cutting, and then an excess material inside the first notch 50 can be removed by stamping. Alternatively, the first notch 50 can be formed in one step by stamping. In these embodiments, the first notch 50 is a substantially trapezoidal joint, and the first notch 50 is located at a junction of the first uncoated foil region 15 of the first current collector 11 and runs through portions of both the first current collector 11 and the first uncoated foil region 15. The first portion 121 of the first tab 12 is formed between two adjacent first notches 50. The remaining portion of the first uncoated foil region 15 remains connected to the first current collector 11 through the first portion 121 and can be synchronously stacked or wound with the first electrode plate 10 during the formation process of the electrode assembly 100. The second notch 60 overlaps a portion of the first notch 50 to cut off the portion of the first uncoated foil region 15 other than the first tab 12, and the first step 13 is formed between the first portion 121 and the second portion 122. A specific cutting process is substantially the same as those of the foregoing embodiments. Details are not described herein again.

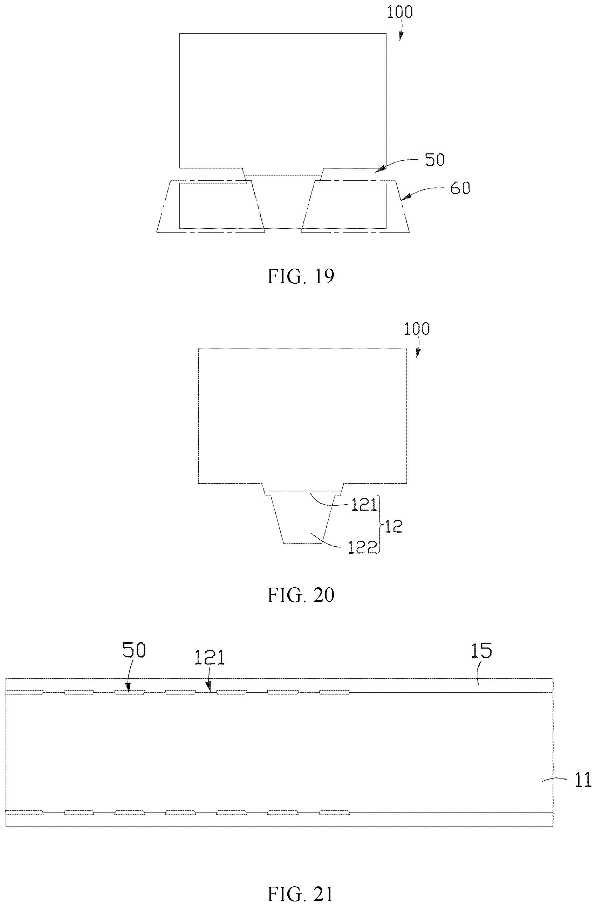

Referring to FIG. 21, a cutting method of the first portion 121 in an embodiment shown in FIG. 21 is substantially the same as that of an embodiment shown in FIG. 17, except that in this embodiment shown in FIG. 21, a plurality of first notches 50 are spaced apart on two opposite side walls of the first current collector 11 to form a plurality of first portions 121, satisfying the folding or winding requirements of the first electrode plate 10. In another embodiment, the plurality of first portions 121 may alternatively be formed at intervals on one side of the first current collector 11.

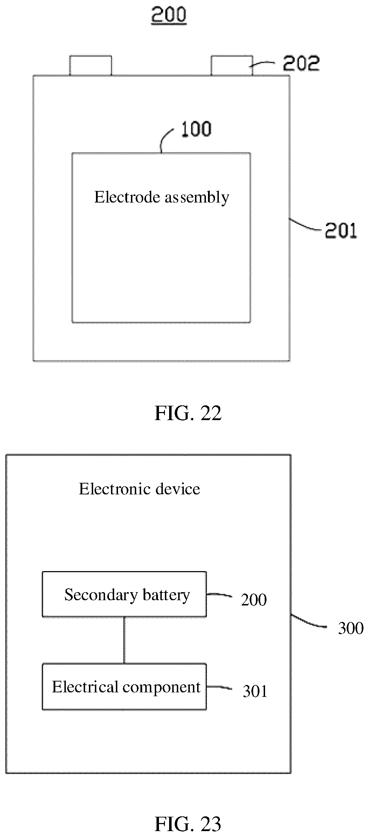

Referring to FIG. 22, an embodiment of this application further provides a secondary battery 200 including a package 201 and the electrode assembly 100 according to the foregoing embodiments, where the electrode assembly 100 is disposed in the package 201. The package 201 may further be provided with an electrical connection terminal 202. The first tab 12 and second tab 22 of the electrode assembly 100 are each connected to a corresponding electrical connection terminal 202.

Referring to FIG. 23, an embodiment of this application further provides an electronic device 300 including an electrical component 301 and the secondary battery 200 according to the foregoing embodiment, where the electrical component 301 is electrically connected to the secondary battery 200. The secondary battery 200 is configured to provide electrical energy to the electrical component 301.

The foregoing embodiments are merely intended to describe the technical solutions of this application and are not intended to constitute any limitation. Although this application is described in detail with reference to the foregoing preferred embodiments, persons of ordinary skill in the art should understand that modifications or equivalent replacements can be made to the technical solutions of this application, without departing from the spirit and scope of the technical solutions of this application.

## Claims

1. An electrode assembly (100), comprising:
a first electrode plate (10);
a second electrode plate (20); and
a separator (30) disposed between the first electrode plate (10) and the second electrode plate (20); wherein the first electrode plate (10), the separator (30), and the second electrode plate (20) form the electrode assembly (100); and
the first electrode plate (10) comprises a first current collector (11) and at least one first tab (12); a first active substance layer (14) is provided on a surface of the first current collector (11); the at least one first tab (12) extends out from one side of the first current collector (11); in an extension direction of the first tab (12), each first tab (12) comprises a first portion (121) and a second portion (122) disposed sequentially; wherein an insulating layer (40) or the first active substance layer (14) is provided on a surface of the first portion (121), and the first portion (121) and the second portion (122) form a first step (13).

2. The electrode assembly (100) according to claim 1, wherein the first step (13) comprises a first section (131), a second section (132), and a third section (133); the second section (132) connects the first section (131) and the third section (133); the first section (131) is connected to the first current collector (11); and an included angle A between the first section (131) and the second section (132) ranges from 90° to 170°.

3. The electrode assembly (100) according to claim 1, wherein the at least one first tab (12) includes a plurality of first tabs (12) stacked together; and a width of a plurality of stacked second portions (122) of the plurality of first tabs (12) is X1 mm, a width of the second portion (122) of a single first tab from the plurality of tabs (12) is X2 mm, and (X1-X2)<0.5 mm.

4. The electrode assembly (100) according to claim 3, wherein (X1-X2)<0.2 mm.

5. The electrode assembly (100) according to any one of claims 3 to 4, wherein
a width of a plurality of stacked first portions (121) of the plurality of first tabs (12) is X3 mm, a width of the first portion (121) of the single first tab from the plurality of tabs (12) is X4 mm, and 0.8 mm>(X3-X4)-(X1-X2)>0.2 mm.

6. The electrode assembly (100) according to any one of claims 1 to 4, wherein the first step (13) comprises the first section (131), the second section (132), and the third section (133); the second section (132) connects the first section (131) and the third section (133); and the first section (131) is connected to the first current collector (11);
an included angle B is present between the first section (131) and a side edge of the first current collector (11), and the included angle B ranges from 70° to 150°; and/or an included angle C is present between the second section (132) and the third section (133), and the included angle C ranges from 70° to 90°.

7. The electrode assembly (100) according to any one of claims 1 to 4, wherein the first step (13) comprises the first section (131), the second section (132), and the third section (133); the second section (132) connects the first section (131) and the third section; the first section (131) is connected to the first current collector (11); and a structure feature of the first tab (12) satisfies any one or more of the following:
(1) in the extension direction of the first tab (12), a width of the insulating layer (40) or the first active substance layer (14) on the first portion (121) is h1, and h1 is in a range of 0.1 mm to 5 mm;
(2) in the extension direction of the first tab (12), a distance between the second section (132) and the first current collector (11) is h2, and h2 is in a range of 0.1 mm to 30 mm; or
(3) in the extension direction of the first tab (12), a length of the third section (133) is h3, and h3 is in a range of 4 mm to 50 mm.

8. The electrode assembly (100) according to any one of claims 1 to 4, wherein
the second electrode plate (20) comprises a second current collector (21) and a second tab (22); a second active substance layer (24) is provided on a surface of the second current collector (21); the second tab (22) extends out from the second current collector (21) and is disposed on one side of the second current collector (21); and in an extension direction of the second tab (22), the second tab (22) comprises a third portion (221) and a fourth portion (222) sequentially disposed; and
a second step (23) is provided between the third portion (221) and the fourth portion (222); wherein the second step (23) comprises a fourth section (231), a fifth section (232), and a sixth section (233); the fifth section (232) connects the fourth section (231) and the sixth section (233); the fourth section (231) is connected to the second current collector (21); and an included angle D is present between the fourth section (231) and the fifth section (232), and D<180°.

9. A method for manufacturing the electrode assembly (100) according to any one of claims 1-8, the method comprising:
providing the first electrode plate (10), wherein the first electrode plate comprises the first current collector (11) and a first uncoated foil region (15), the first current collector is coated with the first active substance layer, and in a width direction of the first current collector (11), the first uncoated foil region (15) is located at a side edge of the first current collector (11);
cutting a portion of the first electrode plate (10) to form the first section of the first tab at one side of the first uncoated foil region (15) close to the first current collector (11), wherein the first uncoated foil region (15) remains partially connected to the first current collector (11);
providing a separator (30) and a second electrode plate (20) on the first electrode plate (10); and
cutting the first uncoated foil region (15) to form a second section (132) and a third section (133) at one side of the first section (131) away from the first current collector (11), wherein a portion of the first uncoated foil region (15) other than the first tab (12) is separated from the first current collector (11), and the first section (131), the second section, and the third section form a first step.

10. The method for manufacturing an electrode assembly (100) according to claim 9, wherein the step of "cutting a portion of the first electrode plate (10) to form a first section (131) of a first tab (12) at one side of the first uncoated foil region (15) close to the first current collector (11)" comprises:
cutting to form at least two first notches (231) on the first current collector (11), wherein the at least two first notches (50) are spaced apart along a length direction of the first electrode plate (10); and
a direction Z is a direction forming an angle of 2° to 90° with the length direction of the first electrode plate (10); along the direction Z, the first notch extends (50) from the first current collector (11) to the first uncoated foil region (15), and the first notch (50) is not through in the direction Z; and a first portion of each first tab (12) is formed between two adjacent ones of the first notches (50).

11. The method for manufacturing an electrode assembly (100) according to claim 10, wherein
each of the first notches (50) comprises a first slit (51) and a second slit (52); the first slit (51) is located at the first current collector (11); and the second slit (52) is connected to the first slit (51), the second slit (52) extends from the first current collector (11) to the first uncoated foil region (15), and the second slit (52) is not through in the direction Z.

12. The method for manufacturing electrode assembly (100) according to claim 10, wherein after the first electrode plate (10), the separator (30), and the second electrode plate (20) form the electrode assembly (100), the step of "cutting the first uncoated foil region (15) to form a second section (132) and a third section (133) at one side of the first section (131) away from the first current collector (10)" comprises:
cutting to form at least two second notches (52) in the first uncoated foil region (15), wherein each of the second notches (52) is connected to the first notch (51) and extends to an outer side edge of the first uncoated foil region (15), so as to cut off a portion of the first uncoated foil region (15) other than the first tab (12), and a second portion (132) of the first tab (12) is formed between two adjacent ones of the second notches (52).

13. The method for manufacturing an electrode assembly (100) according to claim 12, wherein
the first step (13) is formed between the second notch (52) and the first notch (51), and the first step (13) is located in the first uncoated foil region(15).

14. A secondary battery (200), comprising a package (201) and the electrode assembly (100) according to any one of claims 1 to 8, wherein the electrode assembly (100) is disposed in the package (201).

15. An electronic device(300), comprising an electrical component (301) and the secondary battery (200) according to claim 14, wherein the electrical component (301) is electrically connected to the secondary battery (200).
